# DEMANDE DE BREVET EUROPEEN

(11) **EP 4 155 702 A1**
(43) Date de publication de la demande: **29.03.2023**
(21) Numéro de dépôt: 22195544.6
(22) Date de dépôt: 14.09.2022
(51) Int. Cl.: G01L 1/16, G01L 1/18, G01P 15/08, G01P 15/135, G01P 15/09, G01P 15/125, G01L 9/00

(54) **CAPTEUR DE FORCE RÉSONANT A FORTE SENSIBILITÉ AVEC UN CORPS D'ÉPREUVE ET AU MOINS UN ÉLÉMENT RÉSONANT DÉCOUPLÉS ET DISPOSÉS CHACUN DANS UN ENVIRONNEMENT ADAPTÉ**

(30) Priorité: 24.09.2021 FR 2110059
(71) Demandeur: Commissariat à l'énergie atomique et aux énergies alternatives, 75015 Paris (FR)
(72) Inventeur: MIANI, Théo, 38054 Grenoble Cedex 09 (FR); SANSA PERNA, Marc, 38054 Grenoble Cedex 09 (FR)
(74) Mandataire: Brevalex

(57) **Abrégé**

Capteur de force comportant un support, un corps d'épreuve (4), deux jauges de contrainte (24), des moyens de transmission mécanique entre le corps d'épreuve (4) et les jauges de contrainte de sorte qu'un déplacement du corps d'épreuve (4) applique une contrainte aux jauges de contrainte dans une première direction (X) du plan du capteur, les moyens de transmission étant articulés par rapport au support autour d'une deuxième direction (Y1) dans le plan du capteur, le corps d'épreuve (4) étant logé dans un premier volume (V1), les jauges de contrainte étant logées dans un deuxième volume (V2), isolées par des moyens d'isolation étanche. Le capteur comporte un substrat, une couche sacrificielle (12), une couche nanométrique (14), une couche de protection (18) et une couche micrométrique (16). Le corps d'épreuve et au moins une partie du support sont formés dans le substrat (10), les moyens d'isolation étanche sont formés en partie par le couche nanométrique (14) et par la couche sacrificielle (12), et les jauges de contraintes (24) sont formées dans la couche nanométrique.

## Description

### DOMAINE TECHNIQUE ET ETAT DE LA TECHNIQUE ANTERIEURE

La présente invention se rapporte à un capteur à forte sensibilité avec un corps d'épreuve et au moins un élément résonant découplés et disposés chacun dans un environnement adapté.

Un accéléromètre résonant est un exemple d'un capteur résonant comportant une masse suspendue à un support et mobile dans le plan ou dans une direction hors-plan sous l'effet d'une accélération et au moins un résonateur suspendu entre le support et la masse. Le résonateur est par exemple formé par une poutre vibrante, i.e. une poutre mise en vibration à sa fréquence de résonance par des électrodes. Lorsque la masse se déplace sous l'effet d'une accélération, la poutre qui est mécaniquement solidaire de la masse est comprimée ou étirée, ce qui modifie sa fréquence de résonance. La variation de sa fréquence de résonance est détectée, ce qui permet de remonter à la valeur de l'accélération. La poutre résonante est utilisée comme capteur de force.

Les accéléromètres fabriqués suivant la technologie MEMS&NEMS (Microelectromechanical systems & Nanoelectromechanical systems en terminologie anglo-saxonne) comportent une masse de dimensions micrométriques, i.e. ayant une empreinte de quelques 100 µm de côté à quelques mm de côté, par exemple formée par un carré de 1000 µm. L'épaisseur de la masse peut atteindre par exemple jusqu'à 700 µm due à l'épaisseur du substrat, et une ou des poutres résonantes ou résonateurs de dimensions nanométriques, désignés nanorésonateurs. Les nanorésonateurs sont des poutres dont les dimensions peuvent être les suivantes : une longueur de quelques µm à quelques dizaines de µm et une section nanométrique de quelques dizaines de nm à 1 µm de côté.

En miniaturisant les poutres par rapport à la masse, il est possible d'atteindre une sensibilité à l'accélération beaucoup plus importante que celle atteinte par des accéléromètres comportant une masse sismique et des poutres de taille micrométrique. Un résonateur de dimensions nanométriques ou nanorésonateur est très sensible à la force appliquée. La force maximale acceptable pour un tel résonateur est de l'ordre d'une dizaine de µN en compression. Au-delà de cette force, le résonateur flambe et celui n'est plus opérationnel.

Par ailleurs, sous l'effet d'une accélération ou d'un choc la masse peut se comporter comme un résonateur et se mettre à vibrer à sa fréquence de résonance, ce qui peut exposer le nanorésonateur à de forces d'entrée supérieures à ses limites ou rendre le nanorésonateur non opérationnel tant que la masse est en mouvement, ce qui a pour effet d'interrompre la lecture de l'accélération. Ce problème d'interruption de lecture survient également dans le cas de résonateurs de dimensions micrométriques.

Une solution pour pallier ce problème est d'amortir le comportement dynamique de la masse, pour cela le capteur est placé dans un environnement à pression atmosphérique. Le résonateur de dimensions nanométriques est alors protégé contre la résonance de la masse et il est stabilisé contre les vibrations et chocs appliqués à la masse sismique. Cependant, le fait de placer un résonateur dans un environnement à pression atmosphérique le rend sensiblement moins performant.

Par ailleurs il peut être souhaitable d'isoler le résonateur, par exemple pour le protéger d'un fluide en contact avec le corps d'épreuve dans une application à un débitmètre.

### EXPOSÉ DE L'INVENTION

C'est par conséquent un but de la présente invention d'offrir un capteur de force résonant à forte sensibilité et performant.

Le but énoncé ci-dessus est atteint par un capteur de force résonant comportant au moins un corps d'épreuve suspendu à un support, au moins une jauge de contrainte de dimensions nanométriques qui subit une contrainte du fait du déplacement du corps d'épreuve. Le corps d'épreuve et la jauge de contrainte de dimensions nanométriques sont disposés chacun dans un environnement, les deux environnements étant séparés l'un de l'autre de manière étanche. Le capteur comportant également des moyens de transmission pour transmettre le déplacement du corps d'épreuve à la masse sismique entre les deux environnements.

Les moyens de transmission peuvent comporter un arbre de transmission directement solidaire du corps d'épreuve, et articulé en rotation par rapport au support autour d'une direction du plan du capteur, au moins un bras de transmission relié rigidement à l'arbre de transmission et agissant mécaniquement sur la jauge de contrainte. Le bras de transmission s'étend entre les deux environnements.

Par ailleurs, le capteur est réalisé dans un substrat épais sur lequel un empilement de couches est formé, cet empilement comportant au moins une couche d'épaisseur nanométrique séparée du substrat par une couche sacrificielle. Le corps d'épreuve est réalisé dans le substrat. L'isolation étanche des deux environnements est formée par la couche d'épaisseur nanométrique et par la couche sacrificielle et la jauge de contrainte est formée dans la couche d'épaisseur nanométrique.

Ainsi dans le cas d'un accéléromètre, la ou les jauges de contrainte peuvent être situés dans un environnement à basse pression et la masse sismique dans un environnement à pression plus élevée.

Dans le cas d'un débitmètre, les moyens de mesure sont isolés d'un fluide entrant en contact avec le corps d'épreuve.

Dans un exemple avantageux, la ou les jauges de contrainte sont formés dans la couche d'épaisseur nanométrique.

La jauge de contrainte peut être un résonateur formé par une poutre vibrante de taille nanométrique ou une jauge piézorésistive de taille nanométrique.

L'un des objets de la présente demande est un capteur de force comportant un support, un corps d'épreuve suspendu par rapport au support, des moyens de mesure d'une force comportant au moins une jauge de contrainte, des moyens de transmission mécanique entre le corps d'épreuve et les moyens de mesure de sorte qu'un déplacement du corps d'épreuve applique une contrainte aux moyens de mesure dans une première direction du plan du capteur, les moyens de transmission étant articulés par rapport au support autour d'une deuxième direction dans le plan du capteur, le corps d'épreuve étant logé dans un premier volume, les moyens de mesure étant logés dans un deuxième volume, le premier volume et le deuxième volume étant isolés de manière étanche l'un par rapport à l'autre par des moyens d'isolation étanche, le capteur comportant, dans cet ordre, un substrat épais, une couche sacrificielle sur le substrat, une couche nanométrique, une couche de protection et une couche micrométrique, le corps d'épreuve et au moins une partie du support étant formés dans le substrat, les moyens d'isolation étanche étant formés en partie par le couche nanométrique et par la couche sacrificielle et la au moins une jauge de contrainte étant formée dans la couche nanométrique.

Par exemple, les moyens de transmission comportent un arbre de transmission traversant les moyens d'isolation étanche et articulé en rotation par rapport à la couche micrométrique autour d'un axe de rotation orthogonal à la première direction et à une direction hors-plan et au moins un bras de transmission fixé sur l'arbre de transmission disposé dans le deuxième volume et transmettant une contrainte aux moyens de mesure. Les moyens de mesure peuvent comporter des moyens de mise en vibration de ladite jauge de contrainte et des moyens de lecture de la variation de la fréquence de résonance du résonateur.

Dans un exemple avantageux, les moyens de mesure comportent deux jauges de contrainte réalisées dans la couche nanométrique montées en différentiel et les moyens de transmission comportent deux bras de transmission.

Par exemple, le deuxième volume est à une pression P2 inférieure à la pression atmosphérique, avantageusement inférieure à 10 mBar.

Selon une caractéristique additionnelle, le bras de transmission est articulé en rotation au moyen de deux poutres de torsion alignées s'étendant de part et d'autre de l'arbre de transmission entre le bras de transmission et la couche micrométrique.

Dans un exemple avantageux, le capteur de force comporte des moyens de découplage entre le bras de transmission et la jauge de contrainte de sorte à au moins limiter la contrainte appliquée à la jauge de contrainte dans une direction hors-plan. Les moyens de découplage peuvent comporter un chariot guidé en translation selon la première direction du plan et interposé entre le bras de transmission et la jauge de contrainte. Les moyens de découplage peuvent également comporter au moins deux poutres articulées en rotation autour d'une direction hors plan et reliées l'une à l'autre, au bras de transmission et au résonateur de sorte à former des bras de levier et à amplifier la contrainte transmise par le bras de transmission au résonateur.

Le capteur de force peut comporter un capot solidarisé à la couche micrométrique et délimitant en partie le deuxième volume.

Très avantageusement, la au moins une jauge de contrainte est un résonateur à poutre vibrante.

La présente demande a également pour objet un accéléromètre dans le plan comportant un capteur de force selon l'invention, dans lequel le centre de masse du corps d'épreuve et l'axe de rotation sont dans un même plan normal aux première et deuxième directions et dans lequel la pression du premier volume est à la pression atmosphérique.

La présente demande a également pour objet un accéléromètre hors plan comportant un capteur de force selon l'invention, dans lequel le centre de masse du corps d'épreuve et l'axe de rotation sont dans des deux plans normaux aux première et deuxième directions, lesdits plans étant distincts, et dans lequel la pression du premier volume est à la pression atmosphérique.

La présente demande a également pour objet un débitmètre destiné à être disposé dans un écoulement d'un fluide, comportant un capteur de force selon l'invention et dans lequel le substrat est structuré pour permettre au fluide de venir en contact avec une face du corps d'épreuve, ladite face étant orthogonale à la première direction.

Selon une caractéristique additionnelle, le substrat peut comporter des tranchées s'étendant dans des directions hors-plan.

Selon une caractéristique additionnelle, le substrat présente une dimension dans la direction hors-plan inférieure à celle du corps d'épreuve.

### BRÈVE DESCRIPTION DES DESSINS

La présente invention sera mieux comprise sur la base de la description qui va suivre et des dessins en annexe sur lesquels :
La figure 1 est une vue en perspective d'un exemple d'un accéléromètre selon l'invention.
La figure 2 est une vue de dessous de la figure 1, le capot n'étant pas représenté.
La figure 3 est une vue en perspective de l'accéléromètre de la figure 1, une partie du support étant retiré.
La figure 4 est une vue en coupe selon le plan A-A de la figure 1.
La figure 5 est une vue de détail de la figure 3, le nanorésonateur étant représenté.
La figure 6 est une vue de dessus de la figure 1 sans le capot, les deux nanorésonateurs étant représentés.
La figure 7 est une vue de dessus d'un autre exemple d'accéléromètre.
La figure 8 est une vue de dessus d'un autre exemple d'accéléromètre.
La figure 9A est une vue en perspective d'un exemple d'accéléromètre hors-plan.
La igure 9B est une vue en coupe de l'accéléromètre de la figure 9A.
La figure 10A est une vue en perspective d'un exemple d'un débitmètre.
La figure 10B est une vue en coupe du débitmètre de la figure 10A.
La figure 11A est une vue en perspective d'un exemple d'un débitmètre.
La figure 11B est une vue en coupe du débitmètre de la figure 11A.

### EXPOSÉ DÉTAILLÉ DE MODES DE RÉALISATION PARTICULIERS

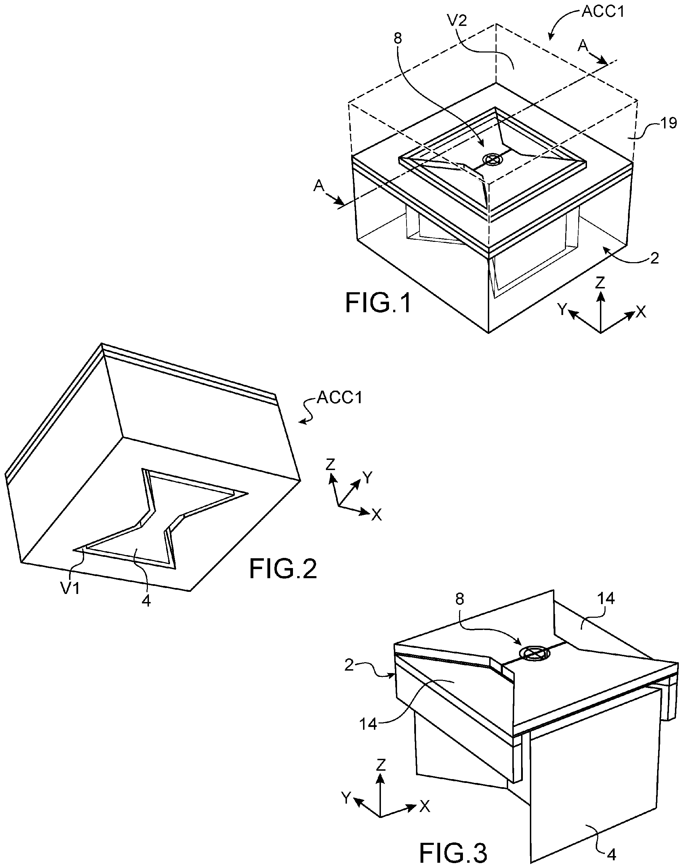

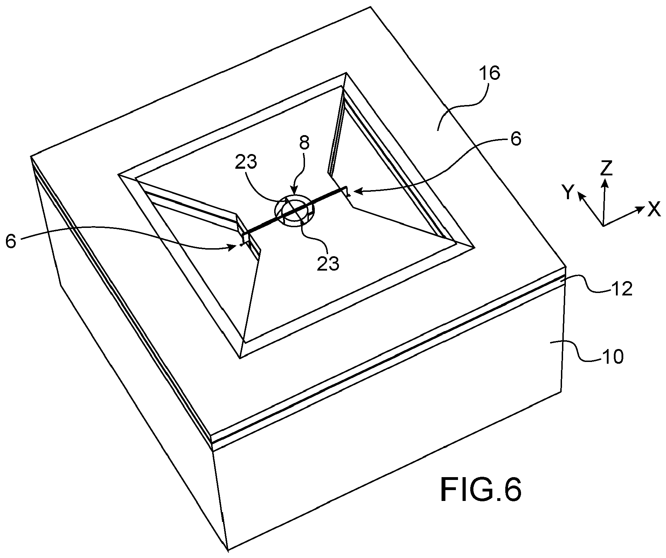

Sur les figures 1 à 6, on peut voir un exemple d'accéléromètre selon l'invention représenté partiellement. Cet accéléromètre est configuré pour détecter une accélération dans le plan. L'accéléromètre est réalisé par des techniques de la microélectronique par empilement de couches et structuration de celles-ci.

Le plan de l'accéléromètre est défini par les directions X et Y dans lesquelles s'étend principalement l'accéléromètre qui sont celles dans lesquels s'étendent le substrat et les différentes couches composant l'accéléromètre. Dans cet exemple, on considère que l'on souhaite mesurer l'accélération selon la direction X.

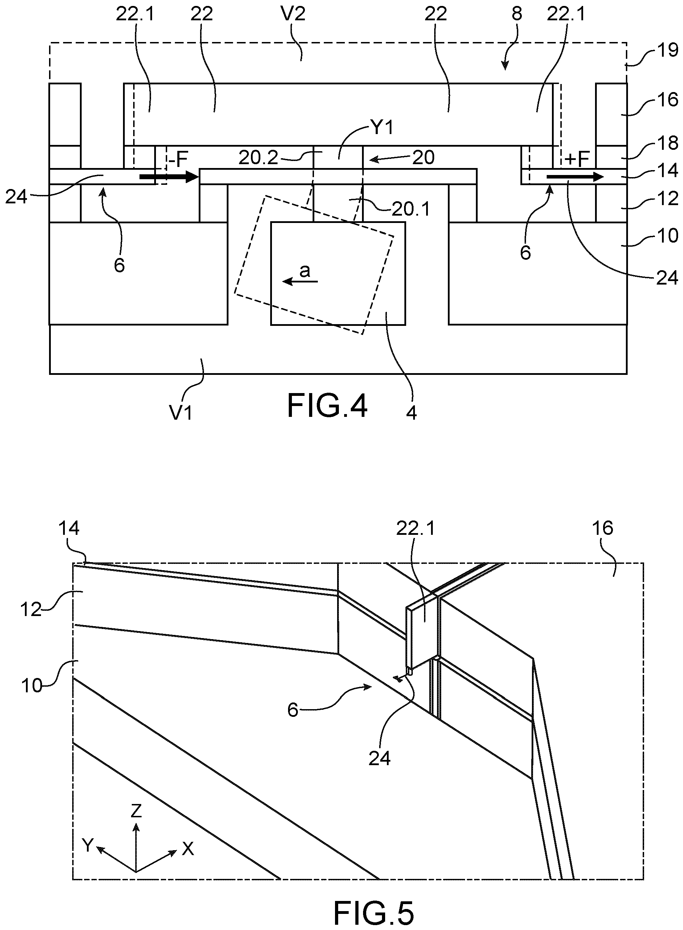

L'accéléromètre comporte un support 2, une masse sismique 4 suspendue par rapport au support 2 et des moyens de mesure 6 (figures 4, 5 et 6) de l'accélération.

En outre l'accéléromètre comporte un premier volume V1 dans lequel est logée la masse sismique 4, et un deuxième volume V2 dans lequel sont logés les moyens de mesure 6. Les volumes V1 et V2 sont isolés de manière étanche l'un par rapport à l'autre et sont à des pressions différentes. Le volume V1 est à une pression P1 supérieure à la pression P2 du volume V2. Par exemple P1 est à la pression atmosphérique et P2 est au plus à 10 mbar, avantageusement inférieure à 1 mbar et encore plus avantageusement inférieure à 10⁻² mbar, voire le vide de l'ordre de 10⁻⁶ mbar.

En outre l'accéléromètre comporte des moyens de transmission 8 d'une force et d'un mouvement entre la masse sismique et les moyens de mesure, et par lesquels la masse est suspendue.

Sur la figure 4, on peut voir une vue en coupe de la figure 1.

L'accéléromètre est réalisé selon des procédés microélectronique à partir d'un substrat 10 désigné "bulk" en terminologie anglo-saxonne. L'épaisseur du bulk est par exemple comprise entre 100 µm et 1000 µm. Le substrat est par exemple en silicium.

Un empilement de couches est formé sur le substrat. L'empilement comporte une couche 12 qui forme une couche sacrificielle et qui participe à l'étanchéité entre les deux volumes, la couche 12 est par exemple en SiO₂. La couche sacrificielle a une épaisseur comprise par exemple entre 3 µm et 5µm.

L'empilement comporte également une couche conductrice 14 d'épaisseur nanométrique désignée "couche nanométrique" ou "couche NEMS". L'épaisseur de la « couche NEMS » est par exemple comprise entre 20 nm et 2 µm. La couche 14 est par exemple en silicium. La couche 14 participe à l'étanchéité entre les deux volumes et c'est dans cette couche que les résonateurs sont réalisés.

L'empilement comporte également une couche d'épaisseur micrométrique 16 dite "couche micrométrique" ou "couche MEMS". L'épaisseur de la « couche MEMS » est par exemple comprise entre 2 µm à 200 µm, et son épaisseur est choisie de sorte à être au moins deux fois plus épaisse que la couche NEMS.

Dans cet exemple, une couche intermédiaire 18 entre la couche NEMS 14 et la couche MEMS 16 est présente assurant lors de la fabrication la protection de la couche NEMS pendant la structuration de la couche MEMS. Cette couche de protection a une épaisseur par exemple comprise entre 1 µm et 5 µm. La couche de protection est par exemple en SiO₂

Dans l'exemple représenté, le substrat forme un support pour l'accéléromètre, et délimite en partie le volume V1 avec la couche NEMS et la couche sacrificielle qui forme un élément d'étanchéité entre la couche NEMS et le substrat 10. Le cordon d'étanchéité entoure la masse.

Le volume V2 est délimité en partie par la surface du substrat 10 recouverte par la couche sacrificielle 12, la couche NEMS 14 et la couche sacrificielle 12 entre le substrat 10 et la couche NEMS 14. En outre un capot 19 (représenté schématiquement en pointillés) est rapporté sur l'empilement de couches et ferme le volume V2. Dans l'exemple représenté le volume V1 est à la pression atmosphérique et est ouvert vers l'extérieur.

La masse sismique 4 est formée dans le substrat 10, celle-ci a par exemple une section dans le plan de 1 mm²; le dispositif de transmission est formé dans la couche sacrificielle 12, la couche MEMS 16, et la couche intermédiaire 18.

Le dispositif de transmission comporte un arbre de transmission 20 s'étendant de part et d'autre de la couche NEMS 14 sensiblement dans la direction hors-plan et au moins un bras de transmission 22, avantageusement deux dans l'exemple représenté. L'arbre de transmission 20 comporte une partie 20.1 dans le volume V1 est reliée à la masse et une partie 20.2 dans le volume V2 est reliée au bras de transmission.

Les deux bras de transmission 22 s'étendent de l'extrémité longitudinale de l'arbre de transmission 20 située dans le volume V2 le long de la direction X. Les bras de transmission 22 s'étendent le long de la direction X dans des sens opposés et comportent chacun une extrémité longitudinale 22.1.

L'arbre de transmission 20 est articulé en rotation autour d'un axe de rotation Y1 parallèle à la direction Y au moyen de deux poutres 23 s'étendant dans la direction Y entre la partie 20.2 de l'arbre de transmission et le reste de la couche MEMS 16 qui entoure la partie 20.1. Les deux poutres 23 sont alignées et sont déformables en torsion. L'axe de rotation Y1 est situé sensiblement au milieu des poutres de torsion dans la direction Z. Cette rotation est rendue possible du fait de la faible épaisseur de la couche NEMS 14, ce qui lui confère une certaine souplesse.

La distance entre l'axe de rotation Y1 et les bras de transmission 22 est faible de sorte que le déplacement des bras de transmission se rapproche le plus possible d'un déplacement en translation le long de la direction X uniquement.

Afin de rendre l'accéléromètre insensible aux accélérations hors-plan et effectivement mesurer l'accélération dans le plan, le centre de masse et l'axe de rotation Y1 de l'arbre de transmission sont situés dans un même plan s'étendant dans les directions Y et Z.

La masse est symétrique par rapport à un plan vertical passant par l'axe de rotation et normal à la direction X.

En outre, elle présente de préférence au niveau de sa connexion à l'arbre de transmission 20 une zone de dimension réduite dans la direction X, ce qui permet de fixer indépendamment la longueur des bras de transmission et les dimensions de la masse pour minimiser l'effet de rotation dans les nanorésonateurs.

Cette forme n'est pas limitative, et toute autre forme de masse qui respecte les conditions de symétrie décrites précédemment sera fonctionnelle, par exemple une masse de forme circulaire ou de forme parallélépipédique.

Dans l'exemple représenté et de manière avantageuse, les moyens de mesure comportent deux résonateurs 24 formés dans la couche NEMS et chaque résonateur 24 est suspendu entre une extrémité libre 22.1 d'un bras de transmission et une partie fixe de l'accéléromètre. Sur les figures 4, 5 et 6, on peut voir les résonateurs. Les résonateurs sont montés en différentielle. Dans cette représentation, la couche sacrificielle 12 et le reste de la couche NEMS 14 ne sont pas représentées sous et autour de nanorésonateurs pour des raisons de clarté, mais celles-ci sont néanmoins présentes. La couche sacrificielle permet de supporter les nanorésonateurs et la couche NEMS autour des nanorésonateurs et sert à la formation des pistes de connexion des nanorésonateurs, des plots de contacts et des moyens de découplage qui seront décrits ci-dessous. Sur la figure 3, on peut voir la couche NEMS libérée de la couche MEMS et de la couche de protection, les nanorésonateurs n'étant pas représentés

Sur la figure 4, on peut voir représentés en pointillés la masse sismique déplacée en rotation autour de l'axe Y sous l'effet d'une accélération dans la direction X, ainsi que le dispositif de transmission déplacé dans la direction X, et la déformation des résonateurs. Les résonateurs sont montés en différentielle. Les flèches - F et + F symbolisent la contrainte appliquée aux résonateurs. -F symbolise une contrainte en compression et +F symbolise une contrainte en traction.

En variante, le dispositif d'articulation ne comporte qu'un seul bras de transmission et les moyens de mesure comportent un seul résonateur.

Les moyens de mesure comportent également des moyens pour mettre en vibration les résonateurs à leur fréquence de résonance. Par exemple il s'agit d'une paire d'électrodes de part et d'autre de chaque résonateur. En outre les moyens de mesure comportent des moyens de lecture de la variation de fréquence de résonance de chaque résonateur, par exemple il s'agit de moyens capacitifs, de moyens piézorésistifs ou de moyens piézoélectriques.

Le volume V1 peut être en communication avec l'environnement extérieur pour établir la pression P1 à la pression atmosphérique comme c'est le cas dans l'exemple représenté. En variante la pression P1 est inférieure ou supérieure à la pression atmosphérique, et est supérieure à la pression P2.

Le fonctionnement de l'accéléromètre va maintenant être décrit.

Une accélération dans la direction X s'applique à la masse sismique 4 qui est alors mise en rotation autour de l'axe Y1 (la figure 4). Cette rotation est transmise via l'arbre de transmission 20 aux bras de transmission 22 qui se déplacent au moins en translation dans la direction X et appliquent une contrainte aux résonateurs, l'un est comprimé et l'autre est étiré. L'arbre de transmission 20 bloque les déflexions dans la direction Y du fait de la rigidité des poutres de torsion dans cette direction.

Les résonateurs préalablement à l'accélération vibraient à une fréquence de résonance donnée. Sous l'effet des contraintes de traction et de compression, leurs fréquences de résonance varient. Les moyens de mesure mesurent ces variations de fréquence qui permettent de remonter à l'accélération.

La masse sismique étant logée dans un environnement à pression atmosphérique, elle est amortie. Ainsi le déplacement de la masse par exemple en cas de choc extérieur est de plus faible amplitude et les risques d'endommagement ou de perturbation du fonctionnement des résonateurs sont réduits.

Les résonateurs étant disposés dans un environnement à faible pression, voire dans le vide, ils présentent un facteur de qualité élevé.

Grâce à l'invention l'accéléromètre est performant tout en protégeant les nanorésonateurs contre la résonance de la masse, contre toutes vibrations de la masse sismique et des chocs appliqués à celle-ci.

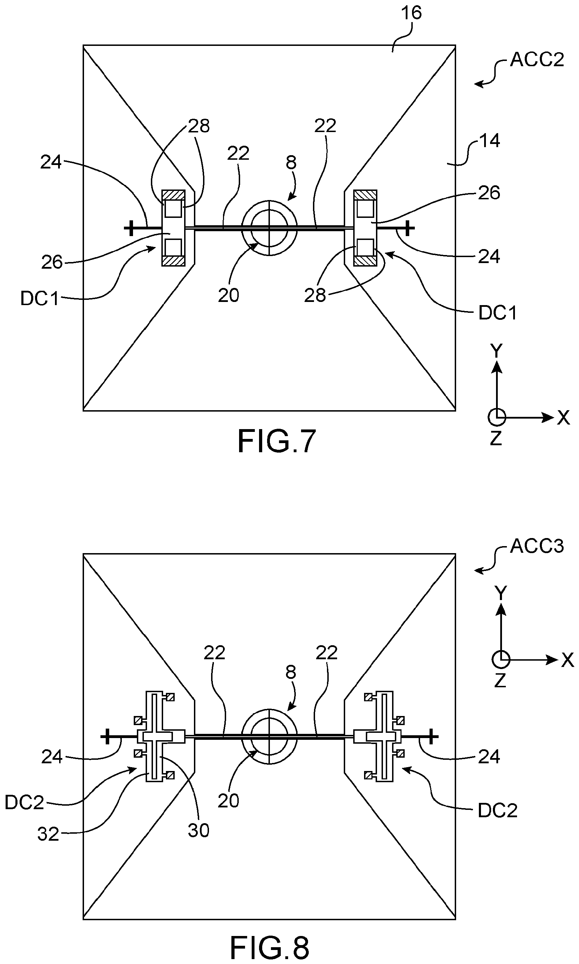

Sur la figure 7, on peut voir un exemple avantageux d'un accéléromètre ACC2 selon l'invention vu de dessus, le capot étant omis.

L'accéléromètre ACC2 diffère de l'accéléromètre ACC1 en ce qu'il comporte des moyens permettant d'éviter les modes parasites de la masse sismique qui dégradent le fonctionnement du capteur.

Des moyens de découplage DC1 sont interposés entre chaque nanorésonateur et le bras de transmission reliés à la masse de sorte que le mouvement du résonateur à sa fréquence de résonance dans sa gamme de fréquence de l'ordre du MHz ou de quelques MHz ne puisse pas actionner les modes parasites de la masse. Ainsi on évite que la fréquence de résonance du résonateur croise la fréquence d'un des modes de la masse sismique.

Dans cet exemple, les moyens DC1 comportent un chariot 26 de forme carrée en vue de dessus, fixé par une face à l'extrémité libre du bras de transmission 22 et par la face opposée à une extrémité longitudinale du résonateur 24. Le chariot 26 est par ailleurs guidé dans la direction X au moyen de deux paires de poutres 28 de part et d'autre de la direction X, dont une extrémité est ancrée sur la couche NEMS. Les poutres 28 sont déformables en flexion dans la direction X.

Sur la figure 8, on peut voir un d'accéléromètre ACC3 comportant un autre exemple de moyens de découplage DC2.

Les moyens de découplage DC2 comportent un système à double levier. La mise en oeuvre d'un tel système offre une amplification qui permet de compenser tout ou partie de la perte de sensibilité qui pourrait résulter de la mise en oeuvre de moyens de découplage.

Le système à double levier comporte un premier levier 30 et un deuxième levier 32, chacun articulé sur le substrat en un point A et B respectivement. Chaque levier 30, 32 comporte un grand bras de levier et un petit bras de levier. Chacune des articulations en rotation est réalisée dans cet exemple par une poutre déformable en flexion ancrée par une extrémité sur la couche NEMS et par une autre extrémité au levier.

Le grand bras de levier du premier levier 30 est relié par une extrémité à l'extrémité libre d'un bras de transmission 22, et le petit bras de levier du premier levier 30 est relié par une extrémité au grand bras de levier du deuxième levier 32 et le petit bras de levier du deuxième levier 32 est relié au nanorésonateur 24. Ainsi l'effort transmis par le bras de transmission 22 est amplifié une première fois et une deuxième fois. Avantageusement, le système à double levier est symétrique par rapport à la direction X et comporte deux paires de leviers symétriques par rapport à l'axe X

La sensibilité peut par exemple être amplifiée entre 10 fois et 100 fois.

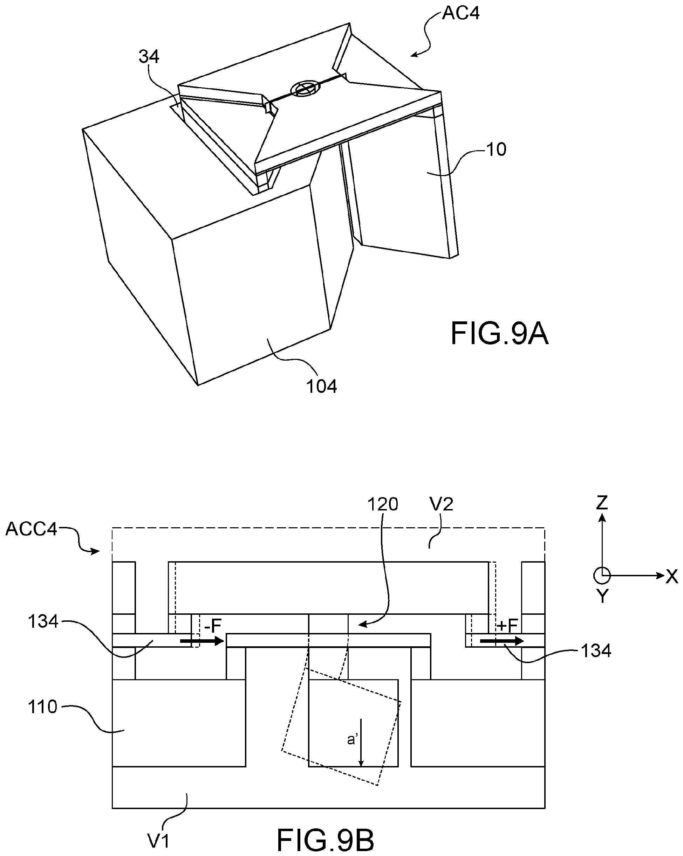

Sur les figures 9A et 9B, on peut voir un exemple de réalisation d'un accéléromètre hors plan ACC4, i.e. mesurant une accélération selon la direction Z.

Cet accéléromètre ACC4 diffère des accéléromètres dans le plan en ce que le centre de masse de la masse sismique et l'axe de rotation de l'arbre de transmission 120 sont dans des plans s'étendant dans les directions Y et Z distincts, ce qui a pour effet de créer un bras de levier. La masse est alors rendue sensible à une accélération hors-plan a', comme cela est représenté en pointillés sur la figure 9B. L'un des résonateurs 134 est étiré et l'autre résonateur est comprimé.

La masse 104 n'est donc plus symétrique par rapport à un plan vertical passant par l'axe de rotation de l'arbre de transmission comme on peut le voir sur la figure 9B. Dans cet exemple, le substrat 110 est structuré de sorte à former une masse qui entoure une partie du substrat qui reste fixe. La masse comporte un passage traversant 34. Cette configuration permet de réaliser une masse de grande dimension.

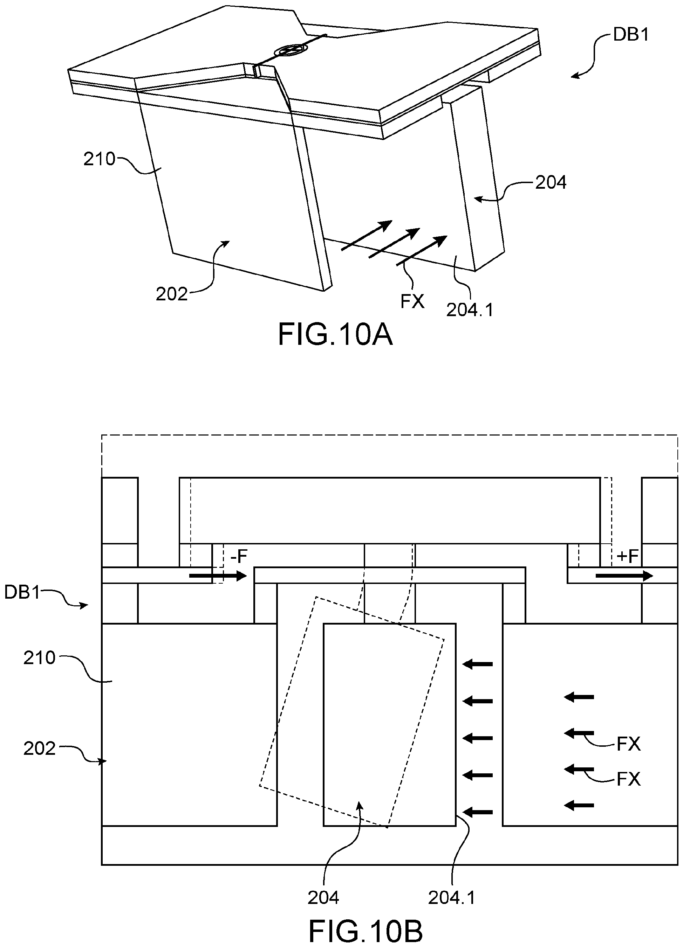

Sur les figures 10A et 10B, on peut voir un exemple de débitmètre DB1 mettant en oeuvre un capteur de force selon l'invention.

Le débitmètre DB1 est adapté pour mesurer un débit dans le plan du capteur, i.e. le plan XY.

Le débitmètre DB1 est configuré pour que le corps d'épreuve 104 soit sensible à l'écoulement d'un fluide (symbolisé par les flèches FX). Pour cela le support 102 du débitmètre est configuré pour permettre l'écoulement du fluide de sorte que le fluide vienne exercer une pression sur la surface 204.1 du corps d'épreuve 204. Par exemple dans le cas où le support 202 est formé par le substrat 210, des tranchées sont réalisées dans le substrat 210, par exemple sur une partie de sa hauteur.

En outre le corps d'épreuve 204 est configuré pour présenter une surface sensible à l'écoulement du fluide importante. Dans l'exemple des figures 10A et 10B, le corps d'épreuve présente une dimension importante dans la direction Y normale à la direction de l'écoulement. Par ailleurs le corps d'épreuve 204 présente une dimension réduite dans la direction X pour réduire sa masse.

L'isolation étanche entre les deux volumes protège les résonateurs du fluide s'écoulant dans le volume V2.

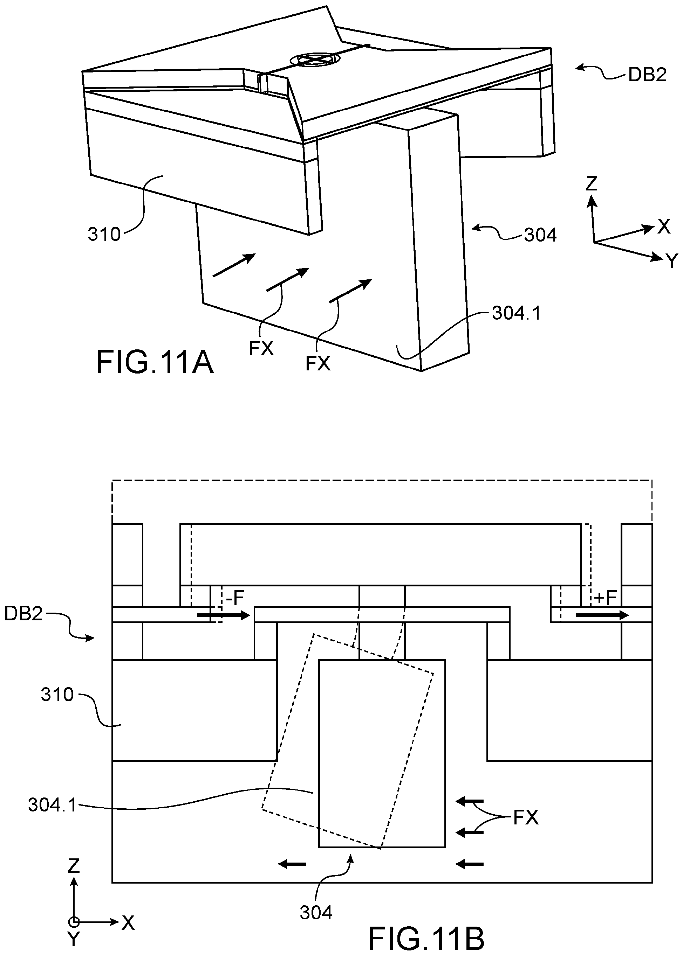

Sur les figures 11A et 11B, on peut voir un autre exemple de débitmètre DB2, celui-diffère du débitmètre DB1 en ce que le corps d'épreuve 304 est dégagé de sorte à permettre au fluide de venir en contact avec la partie inférieure de la face sensible 304.1 du corps d'épreuve éloigné de l'axe de rotation de l'arbre de transmission. Ce dégagement est obtenu en gravant le substrat 310 afin de réduire son épaisseur et laisser dépasser le corps d'épreuve 304 du substrat 310 dans la direction Z. Par exemple pour un substrat d'épaisseur initiale 1 mm celui est gravé sur 0,5 mm. Ainsi un corps d'épreuve mesurant 1 mm de largeur, i.e. dans la direction Y présente une surface soumis à la pression du fluide de 1 mm x 0,5 mm. Cette configuration, du fait d'un bras de levier allongé, permet de bénéficier d'une amplification supplémentaire.

Dans les exemples représentés, les moyens de mesure comportent des nanorésonateurs formés dans la couche NEMS. En variante, les moyens de mesure comportent des microrésonateurs formés dans la couche MEMS. Ces résonateurs sont reliés mécaniquement aux bras de transmission 22 des moyens de transmission.

Dans un autre exemple de réalisation, les moyens de mesures comportent au moins une jauge piézorésistive, avantageusement deux montées en différentiel. Tous les exemples décrits ci-dessus peuvent mettre en oeuvre une ou des jauges piézorésistive(s) à la place du ou des résonateurs.

Le capteur de force selon l'invention est fabriqué avec les techniques de de fabrication des systèmes microélectromécaniques et nanoélectromécaniques ou M&NEMS (Micro&nanomicroelectromechanical systems).

Par exemple il peut être fabriqué en utilisant le procédé décrit dans le document WO201148138.

Nous allons décrire brièvement les étapes de fabrication de l'accéléromètre ACC1.

Par exemple, on part d'un substrat Silicium sur Isolant ou SOI (Silicon on Insulate en terminologie anglo-saxonne) comportant un substrat 10 en silicium formant le bullk, une couche de SiO₂ formant la couche sacrificielle 12 et une couche de silicium monocristallin formant la couche NEMS.

La couche NEMS 14 est structurée notamment pour former les nanorésonateurs.

Ensuite la couche de protection 18 est formée sur la couche NEMS 14.

La couche MEMS 16 est ensuite formée sur la couche de protection 18.

La couche MEMS 16 est structurée, par exemple par gravure, notamment pour former les bras de transmission 22. La présence de la couche de protection permet de graver la couche MEMS sans détériorer la couche NEMS.

On supprime ensuite la couche de protection au-dessus des nanorésonateurs.

Les nanorésonateurs sont ensuite libérés par gravure de la couche sacrificielle.

La réalisation de l'arbre de transmission peut se faire selon la méthode suivante. Tout d'abord une gravure en face avant a lieu. Pour cela, la couche NEMS est protégée sur toute la zone autour de l'arbre de transmission ce qui assure l'étanchéité. Une croissance de la couche MEMS au centre de cette zone permet de dessiner l'arbre de transmission 20 ainsi que les bras de transmission 22. La couche de protection NEMS est alors libérée sur toute la zone d'étanchéité de la couche NEMS sauf à son centre pour maintenir la continuité de l'arbre de transmission 20.

La masse sismique, quant à elle, est gravée en face arrière. Son détourage se fait sur la couche bulk. Une fois la couche bulk gravée, la couche sacrificielle 12 est gravée afin de libérer la masse sauf en son centre pour maintenir la continuité de l'arbre de transmission 20. Ensuite un capot est reporté sur la couche MEMS de sorte à former le volume V2. Le report du capot se fait dans un environnement à la pression P2 de sorte que la pression dans le volume V2 soit à la pression P2.

Il peut être prévu de reporter l'accéléromètre sur un support.

En variante, l'arbre de transmission est réalisé uniquement dans la couche MEMS.

## Revendications

1. Capteur de force comportant un support, un corps d'épreuve (4) suspendu par rapport au support, des moyens de mesure d'une force comportant au moins une jauge de contrainte (24), des moyens de transmission mécanique entre le corps d'épreuve (4) et les moyens de mesure de sorte qu'un déplacement du corps d'épreuve applique une contrainte aux moyens de mesure dans une première direction du plan du capteur, les moyens de transmission étant articulés par rapport au support autour d'une deuxième direction (Y1) dans le plan du capteur, le corps d'épreuve (4) étant logé dans un premier volume, les moyens de mesure étant logés dans un deuxième volume, le premier volume (V1) et le deuxième volume (V2) étant isolés de manière étanche l'un par rapport à l'autre par des moyens d'isolation étanche, dans lequel le capteur comporte, dans cet ordre, un substrat épais, une couche sacrificielle (12) sur le substrat, une couche nanométrique (14), une couche de protection (18) et une couche micrométrique (16), dans lequel le corps d'épreuve (4) et au moins une partie du support sont formés dans le substrat, dans lequel les moyens d'isolation étanche sont formés en partie par le couche nanométrique et par la couche sacrificielle et dans lequel la au moins une jauge de contrainte (24) est formée dans la couche nanométrique.

2. Capteur de force selon la revendication 1, dans lequel les moyens de transmission comportent un arbre de transmission (20) traversant les moyens d'isolation étanche et articulé en rotation par rapport à la couche micrométrique autour d'un axe de rotation (Y1) orthogonal à la première direction (X) et à une direction hors-plan (Z) et au moins un bras de transmission (22) fixé sur l'arbre de transmission (20) disposé dans le deuxième volume (V2) et transmettant une contrainte aux moyens de mesure.

3. Capteur de force selon la revendication 2, dans lequel les moyens de mesure comportent deux jauges de contrainte (24) réalisées dans la couche nanométrique montés en différentiel et les moyens de transmission comportent deux bras de transmission (22).

4. Capteur de force selon l'une des revendications 1 à 3, dans lequel le deuxième volume (V2) est à une pression P2 inférieure à la pression atmosphérique, avantageusement inférieure à 10 mBar.

5. Capteur de force selon l'une des revendications 2 à 4 lorsque rattachée à la revendication 2, dans lequel le bras de transmission (22) est articulé en rotation au moyen de deux poutres de torsion alignées s'étendant de part et d'autre de l'arbre de transmission entre le bras de transmission (20) et la couche micrométrique (16).

6. Capteur de force selon l'une des revendications 2 à 5 lorsque rattachée à la revendication 2, comportant des moyens de découplage entre le bras de transmission (22) et la jauge de contrainte de sorte à au moins limiter la contrainte appliquée à la jauge de contrainte dans une direction hors-plan.

7. Capteur de force selon la revendication 6, dans lequel les moyens de découplage comportent un chariot guidé en translation selon la première direction du plan et interposé entre le bras de transmission (22) et la jauge de contrainte.

8. Capteur de force selon la revendication 7, dans lequel les moyens de découplage comportent au moins deux poutres articulées en rotation autour d'une direction hors plan et reliées l'une à l'autre, au bras de transmission et à la jauge de contrainte de sorte à former des bras de levier et à amplifier la contrainte transmise par le bras de transmission (22) à la jauge de contrainte.

9. Capteur de force selon l'une des revendications 1 à 8, comportant un capot solidarisé à la couche micrométrique et délimitant en partie le deuxième volume.

10. Capteur de force selon l'une des revendications 1 à 9 de lequel la au moins une jauge de contrainte est un résonateur à poutre vibrante.

11. Capteur de force selon la revendication 10, dans lequel les moyens de mesure comportent des moyens de mise en vibration de la poutre vibrante (24) et des moyens de lecture de la variation de la fréquence de résonance de la poutre vibrante.

12. Accéléromètre dans le plan comportant un capteur de force selon l'une des revendications 1 à 11, dans lequel le centre de masse du corps d'épreuve et l'axe de rotation (Y1) sont dans un même plan normal aux première et deuxième directions et dans lequel la pression du premier volume est à la pression atmosphérique.

13. Accéléromètre hors plan comportant un capteur de force selon l'une des revendications 1 à 11, dans lequel le centre de masse du corps d'épreuve et l'axe de rotation sont dans des deux plans normaux aux première et deuxième directions, lesdits plans étant distincts, et dans lequel la pression du premier volume est à la pression atmosphérique.

14. Débitmètre destiné à être disposé dans un écoulement d'un fluide, comportant un capteur de force selon l'une des revendications 1 à 11 et dans lequel le substrat est structuré pour permettre au fluide de venir en contact avec une face du corps d'épreuve, ladite face étant orthogonale à la première direction.

15. Débitmètre selon la revendication 14, dans lequel le substrat comporte des tranchées s'étendant dans des directions hors-plan ou dans lequel le substrat présente une dimension dans la direction hors-plan inférieure à celle du corps d'épreuve.
